# EUROPEAN PATENT APPLICATION

(11) **EP 2 503 174 A1**
(43) Date of publication of application: **26.09.2012**
(21) Application number: 10831486.5
(22) Date of filing: 09.11.2010
(51) Int. Cl.: F16D 28/00

(54) **CLUTCH ACTUATOR**

(30) Priority: 19.11.2009 JP 2009263939
(71) Applicant: Aisin Seiki Kabushiki Kaisha, Aichi 448-8650 (JP); Aisin AW Co., Ltd., Anjo-shi, Aichi 444-1192 (JP); AISIN AI Co., Ltd., Nishio-shi, Aichi 445-0006 (JP)
(72) Inventor: NAKANE, Yasuhiro, Kariya-shi Aichi 448-8650 (JP); MORI, Kyosuke, Kariya-shi Aichi 448-8650 (JP); NAGASAKA, Hiroyuki, Kariya-shi Aichi 448-8650 (JP); YOSHIDA, Masahiro, Kariya-shi Aichi 448-8650 (JP)
(74) Representative: Kramer - Barske - Schmidtchen
(86) International application number: PCT/JP2010/069937
(87) International publication number: WO 2011/062091

(57) **Abstract**

A clutch actuator capable of reducing load on a power source, includes a power source, and a cam rotated by rotational power transmitted from the power source. The cam has on its outer peripheral surface a cam surface whose distance from an axis of rotation varies. The clutch actuator also includes an output rod slidably supported by a predetermined member, such as housing. The output rod performs a stroke movement along with rotation of the cam for engaging/ disengaging the clutch by the stroke movement. The axis of rotation of the cam is arranged on an extended line of a center axis of the output rod (Fig.1).

## Description

### TECHNICAL FIELD

### [References to related application]

The present application claims priority rights based on JP Patent Application 2009-263939 filed in Japan on November 19, 2009. The entire disclosure contents of the Patent Application are to be incorporated by reference into the present Application.
This invention relates to a clutch actuator that fully or semi-fully engages/ disengages a clutch.

### BACKGROUND ART

There has so far been known a system in which an actuator is provided in a pre-existing manual transmission to permit automatically performing a sequence of speed change operations, such as clutch engagement/ disengagement, gear shift or gear selection, subject to a driver's intention or depending on vehicle states. In such system, a clutch actuator that fully or semi-fully engages/ disengages the clutch is provided with a power source, such as an electric motor, and an output rod, in order to change the position of a diaphragm spring, for example, of the clutch. The stroke movement of the output rod is in need of a large force, leading to an increase in size if a power source that develops a large power is used. Thus, in the routine clutch actuator, a worm gearing including a worm and a worm wheel is used on a motive power transmission path between the power source and the output rod for speed reduction. It is intended in this manner to suppress the driving power of the power source needed and to self-hold the stroke position even if the power source is in off state.

Patent Literature (PL 1) shows, as a clutch actuator of the conventional technique, such a clutch actuator including a power source, a rotor (worm) rotationally driven by the power source, a follower rotor (worm wheel) engaged to and rotated in unison with the rotor, and an output rod connected to the follower rotor rotatably relative to the follower rotor. The clutch may be fully or semi-fully engaged or disengaged as a result of movement of the output rod. A connecting member is arranged between the rotor and the driven rotor. The rotor and the driven rotor are not arranged in the same plane. An assist spring, having one end carried by the housing, assists rotation of the follower rotor. In this clutch actuator, the output rod is connected to the follower rotor by having its end connected for rotation at a position radially offset from the rotational axis of the follower rotor (worm wheel). The output rod performs a stroke movement by exploiting the circumferential displacement of the connecting portion.

Patent Publication (PL 2) shows a clutch actuator in which a cam surface is provided at a preset position on the peripheral surface of a worm wheel, and a roll that may perform a rolling movement on the cam surface is mounted for rotation at the end of an output rod. The roll has its rotational axis pivotally mounted at the foremost part of a lever in turn pivotally mounted to the housing. In this clutch actuator, the output rod may perform a stroke movement by exploiting position movement of the roll attendant on the circumferential movement of the cam surface.

### PRIOR ART LITERATURE

### PATENT LITERATURE

PL 1: JP Patent Kokai JP2004-301238A
PL 2: German Patent Laid-Open DE19723394A (Fig.17)

### SUMMARY OF THE INVENTION

### PROBLEM TO BE SOLVED BY THE INVENTION

The disclosure contents of the above PL 1 and PL 2 are incorporated by reference in the present application. The following analysis is made by the present invention.

In the clutch actuator shown in PL 1, the end of the output rod is connected for rotation at the position radially offset from the rotational axis of the follower rotor (worm wheel), and hence the rotational axis of the worm wheel is not located at all times on an extended line of the center axis of the output rod. Thus, if the rotational axis of the worm wheel is offset from the extended line of the center axis of the output rod, there is generated a torque in a direction to push back the worm wheel, that is, in the direction of reverse rotation, due to a load applied to the output rod (push-back load). This increases the load applied to the power source and hence the power consumption.

In the clutch actuator shown in PL 2, the roll is displaced by the swiveling movement of the lever and by circumferential movement of the cam surface of the worm wheel. Hence, the rotational axis of the worm wheel is not always located on the extend line of the output rod, such that there is generated a torque in a direction in which the load acting on the output rod (push-back load) will push back the worm wheel, that is, in a direction of reverse rotation. This increases the load on the power source and hence the power consumption.

It is a principal object of the present invention to provide a clutch actuator capable of reducing the load applied to the power source.

### MEANS TO SOLVE THE PROBLEM

In one aspect, the present invention provides a clutch actuator comprising a power source, a cam rotated by rotational power transmitted from the power source, and an output rod. The cam has, on its outer peripheral surface, a cam surface whose distance from its axis of rotation varies. The output rod is slidably carried by a predetermined member and performs a stroke movement along with rotation of the cam to engage/disengage a clutch by the stroke movement. The axis of rotation of the cam is arranged on an extended line of a center axis of the output rod.

The clutch actuator according to the present invention preferably further includes a rotor carried for rotatably by the output rod and adapted to be capable of rolling on the cam surface. An abutting part of the cam surface and the rotor is preferably disposed on the extended line of the center axis of the output rod on a side closer to the output rod than the axis of rotation of the cam.

The clutch actuator according to the present invention preferably further includes a rotor carried rotatably by the output rod and adapted to be capable of rolling on the cam surface. An abutting part of the cam surface and the rotor is preferably disposed on the extended line of the center axis of the output rod at a position on a side opposite to the side of the output rod with respect to the axis of rotation of the cam.

The clutch actuator according to the present invention preferably further includes one or a plurality of speed-reduction mechanisms that reduce the speed of the rotational power output from the power source to transmit the rotational power reduced in speed to the cam.

In the clutch actuator according to the present invention, the speed-reduction mechanism preferably includes a worm rotationally driven by the power source, and a worm wheel meshing with the worm and adapted to be rotated in unison with the cam.

In the clutch actuator according to the present invention, the speed-reduction mechanism preferably includes a worm rotationally driven by the power source, a worm wheel meshing with the worm, a drive gear rotated in unison with the worm wheel and smaller in diameter than the worm wheel, and a driven gear meshing with the drive gear and larger in diameter than the drive gear. The driven gear is preferably rotated in unison with the cam.

In the clutch actuator according to the present invention, the axis of rotation of the cam is [disposed on a center axis of] an output shaft of the power source.

The clutch actuator according to the present invention preferably further includes a housing that rotatably carries the axis of rotation of the cam.

The clutch actuator according to the present invention preferably further includes a rotor carried rotatably by the output rod and adapted to be capable of rolling on the cam surface. An abutting part of the cam surface and the rotor is disposed on an extended line of the center axis of the output rod at a position intermediate between the axis of rotation of the cam and an end face of the output rod.

The clutch actuator according to the present invention preferably further includes a rotor carried rotatably by the output rod and adapted to be capable of rolling on the cam surface. An abutting part of the cam surface and the rotor is preferably disposed on an extended line of the center axis of the output rod at a portion other than a position intermediate between the axle of rotation of the cam and an end face of the output rod.

### Meritorious effect of the invention

According to the present invention, in which the load acting on the output rod may be sustained by the axis (axle) of rotation of the cam, the torque acting in the direction of pushing back the cam, that is, in the direction of the reverse rotation, may be reduced. Hence, the onus to the power source may be reduced to save the electric power.

### BRIEF DESCRIPTION OF THE DRAWINGS

Fig.1 is a schematic cross-sectional view showing a configuration of a clutch actuator according to Example 1 of the present invention.
Fig.2 is a schematic cross-sectional view, taken along line X-X' of Fig.1, and shows the configuration of the clutch actuator according to Example 1 of the present invention.
Fig.3 is a schematic side view for illustrating the stroke movement of an output rod of the clutch actuator according to Example 1 of the present invention.
Fig.4 is a schematic side view for illustrating the stroke movement of an output rod of the clutch actuator according to Comparative Example 1.
Fig.5 is a schematic side view for illustrating the stroke movement of an output rod of the clutch actuator according to Comparative Example 2.
Fig.6 is a schematic cross-sectional view showing the configuration of a clutch actuator according to Example 2 of the present invention.
Fig.7 is a schematic cross-sectional view, taken along line X-X' of Fig.6, and shows the configuration of the clutch actuator according to Example 2 of the present invention.
Fig.8 is a schematic cross-sectional view showing the configuration of a clutch actuator according to Example 3 of the present invention.
Fig.9 is a schematic cross-sectional view, taken along line X-X' of Fig.8, and shows the configuration of the clutch actuator according to Example 3 of the present invention.
Fig.10 is a schematic cross-sectional view showing the configuration of a clutch actuator according to Example 4 of the present invention.
Fig.11 is a schematic cross-sectional view, taken along line X-X' of Fig.10, and shows the configuration of the clutch actuator according to Example 4 of the present invention.

### MODES FOR CARRYING OUT THE INVENTION

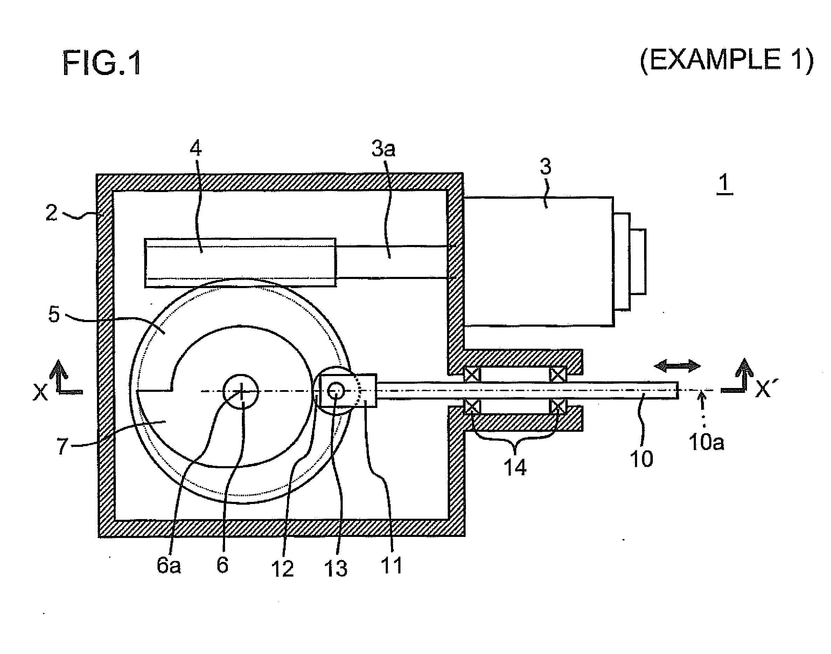

A clutch actuator according to an exemplary embodiment of the present invention includes a power source (3 of Fig.1), a cam (7 of Fig.1) rotated by rotational power transmitted from the power source, and an output rod (10 of Fig. 1). The cam has, on its outer peripheral surface, a cam surface whose distance from its axis of rotation (corresponding to 6a of Fig.1) is varied. The output rod is slidably carried by a predetermined member (e.g., a housing 2 of Fig.1) and performs a stroke movement along with rotation of the cam to engage/disengage a clutch as a result of the stroke movement. The axis of rotation of the cam is arranged on an extended line (10a of Fig.1) of a center axis of the output rod.

It should be noted that reference numerals to the drawings are merely for assisting the understanding and are not intended to limit the present invention to the specified mode illustrated in the drawings.

### Example 1

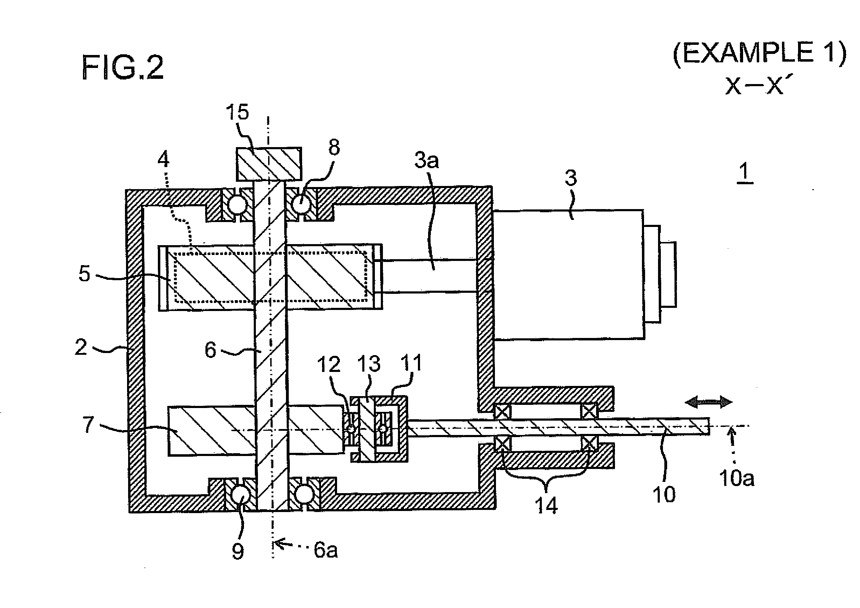

A clutch actuator according to Example 1 of the present invention will now be described with reference to the drawings. Fig.1 depicts a cross-sectional view schematically showing a clutch actuator 1 according to Example 1 of the present invention. Fig.2 is a cross-sectional view, taken along line X-X' of Fig.1, and schematically shows the configuration of a clutch actuator 1 according to Example 1 of the present invention.

The clutch actuator 1 is an electrically driven actuator that causes reciprocating movement of an output rod 10 to engage/disengage and semi-fully engage a clutch (termed cumulatively herein as "fully or semi-fully engage/disengage a clutch", not shown. The clutch actuator actuates the clutch to change the state of engagement under driving control by an electronic controller, also not shown. The clutch being semi-fully engaged denotes a state in which a clutch engagement operation is commenced and the clutch has not been fully engaged. The clutch actuator 1 of Figs.1 and 2 is used for a clutch of the type in which the load is applied by the output rod 10 in a direction of inwardly pushing a target or object under actuation, that is, in a rightward direction in Fig.1. The target or object under actuation denotes a release fork if the clutch is of the mechanical system, and denotes a hydraulic piston if the clutch is of the hydraulic system. The clutch actuator 1 includes, as principal components, a housing 2, an electric motor 3, a worm 4, a worm wheel 5, a shaft 6, a cam 7, bearings 8, 9, an output rod 10, a holding member 11, a bearing 12, a shaft (or pin) 13, a bush 14 and a rotation sensor 15.

The housing 2 is a component in which to accommodate components provided on a motive power transmitting path from an output shaft 3a of the electric motor 3 to the output rod 10. The housing 2 may be combined from a plurality of members, to form a housing body, and is secured to a suitable place in a vehicle. The electric motor 3 is mounted on the housing 2 in such a way that a main body member of the motor 3 is arranged on an outside and the foremost part of the output shaft 3a of the motor 3 is arranged within the housing 2. The housing has a through-hole, not shown, for letting the output shaft 3a to be inserted at a preset distance. The housing 2 carries the shaft 6 for rotation via bearings 8, 9. The housing 2 also carries the output rod 10 to permit its stroke movement via bushes (bearings) 14.

The electric motor 3 operates as a power source for direct-current driving, and rotationally drives the output shaft 3a in the forward and reverse directions of rotation under control from an electronic controller, not shown. The electric motor 3 is mounted on the housing 2 so that its output shaft 3a will extend at a right angle relative to the shaft 6.

The worm 4 is a screw gear connected to the output shaft 3a of the electric motor 3 and is a component part of a slide gear reduction mechanism. The worm 4 is accommodated within the housing 2, and is driven for rotation by the output shaft 3a of the electric motor 3. The worm 4 meshes with a worm wheel 5.

The worm wheel 5 is a helical gear meshing with the worm 4, and is a component part of the slide gear reduction mechanism. The worm wheel 5 is accommodated within the housing 2 and secured to the shaft 6 in a manner that its rotation relative to the shaft 6 is not possible. The worm wheel 5 is carried by the housing 2 for rotation via shaft 6 and bearings 8, 9, and may be rotated in unison with the cam 7 via the shaft 6.

The shaft 6 operates as a rotational shaft or axle for the worm wheel 5 and the cam 7, and has its one end carried for rotation by the housing 2 via bearing 8, while having its other end carried for rotation by the housing 2 via bearing 9. The portion of the shaft 6 intermediate between the bearings 8, 9 is accommodated within the housing 2, while the end part of the shaft 6 towards the bearing 8 is exposed to outside the housing 2. The rotation sensor 15 is mounted on the end of the shaft 6 towards the bearing 8. The worm wheel 5 and the cam 7 are secured to the portion of the shaft 6 intermediate between the bearings 8, 9 in a manner that rotation thereof relative to the shaft 6 is not possible. The shaft 6 has its center axis 6a disposed on an extened line of the center axis 10a of the output rod 10.

The cam 7 is a member that varies the stroke position of the output rod 10, and is a component part of the stroke movement unit. The cam 7 is arranged within the housing 2. The cam 7 is arranged at a position axially offset from the worm wheel 5, and is secured to the shaft 6 as the rotational shaft or axle in such a manner that the rotation thereof relative to the shaft 6 is not possible. The cam 7 may be rotated in synchronism and in unision with the worm wheel 5 via the shaft 6. An outer peripheral surface of the cam 7 is formed as a curved cam surface the profile of which is changed so that the distance of the cam surface from the center axis 6a of the shaft 6 becomes progressively smaller (or larger). An outer race of the bearing 12 is abutted against the cam surface. The portion of abutment of the cam 7 and the bearing 12 is disposed on the extended line of the center axis 10a of the output rod 10. When the cam 7 is rotated, the output rod 10 performs a stroke movement, along its center axis 10a, via bearing 12, shaft (pin) 13 and holding member 11. It should be noted that, in case the load applied from outside to the output rod 10 (push-back load) acts on the outer peripheral surface of the cam 7 via holding member 11, shaft (pin) 13 and bearing 12, only small torque is generated in a direction to push back the cam 7, that is, in a direction of reverse direction. It is because the center axis 10a of the output rod 10 is disposed on the extended line of the center axis 10a of the output rod 10.

The bearing 8 rotatably carries one end of the shaft 6 and is mounted on the housing. The bearing 9 rotatably carries the other end of the shaft 6 and is similarly mounted on the housing. Slide bearings may also be used instead of the bearings 8, 9.

The output rod 10 is a bar-shaped member that, based on its stroke movement, fully or semi-fully engages or disengages the clutch. The foremost part of the output rod 10 is protruded out of the housing 2 to push an object under actuation, which may be a release fork or a hydraulic piston if the clutch is of the mechanical system or the hydraulic system, respectively. The mid part of the output rod 10 is carried via bushes 14 by the housing 2 in such a manner as to perform a stroke movement. An end part of the output rod 10 is accommodated within the housing 2, and the holding member 11 is secured to the extreme end of the output rod 10. The bearing 12 and the shaft (pin) 13 are assembled via the holding member 11 to the output rod, so that the output rod performs stroke movement in unison with the holding member 11, bearing 12 and the shaft (pin) 13. The center axis 6a of the shaft 6 is disposed on the extended line of the center axis 10a of the output rod 10. That is, the center axis 6a intersects the center axis 10a of the output rod 10. When the cam 7 is brought in rotation, the output rod 10 performs the stroke movement via bearing 12, shaft (pin) 13 and holding member 11.

The holding member 11 is secured to the output rod 10, while holding the bearing 12 via shaft (pin) 13. The holding member 11, accommodated within the housing 2, is configured so as not to contact with the bearing 12 or the cam 7.

The bearing 12 is configured to roll on the outer periphery of the cam 7, and is accommodated within the housing 2. The bearing 12 may be a ball bearing having a plurality of balls arranged between inner and outer races. The outer race of the bearing 12 abuts against the outer periphery of the cam 7 and operates as a rotor capable of rolling on the outer periphery of the cam. The inner race of the bearing 12 is secured to the shaft (pin) 13. The bearing 12 is abutted against the cam 7 at a site lying on the extended line of the center axis 10a of the output rod 10. The bearing 12 is displaced by rotation of the cam 7 to cause the stroke movement of the output rod 10 [along the center axis 10a]. A slide bearing or a roll may be used in place of the bearing 12.

The shaft (pin) 13, a bar-shaped member carrying the bearing 12, has its both ends secured to the holding member 11. The shaft (pin) 13 is accommodated within the housing 2.

The bushes 14 are adapted to carry the output rod 10 such as to permit its stroke movement, and are carried within the housing 2.

The rotation sensor 15 detects the angle of rotation of the shaft 6, and outputs a signal corresponding to the angle of rotation detected to an electronic controller, not shown. It should be noted that the electronic controller is responsive to the control signal corresponding to the angle of rotation from the rotation sensor 15 to control the electric motor 3, based on a map or a program, so that the output rod 10 will get to the preset stroke position.

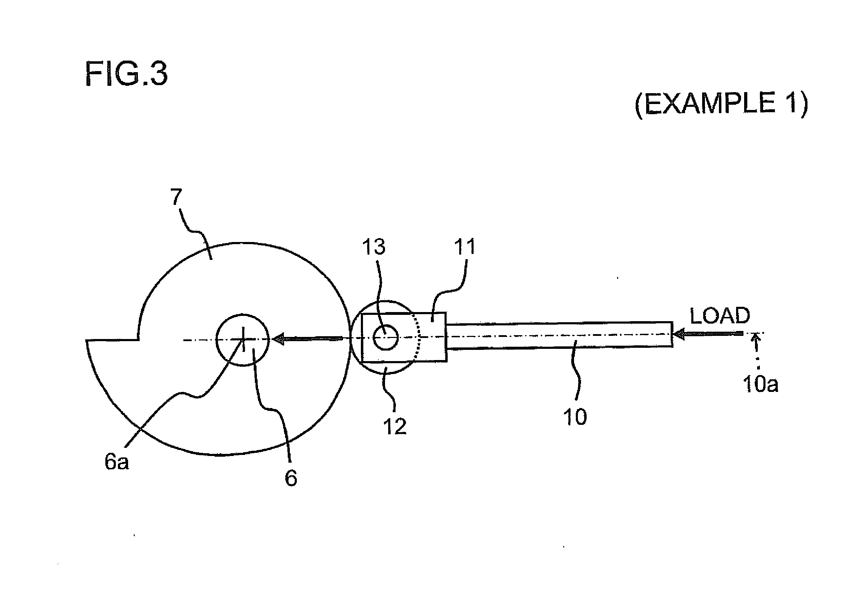

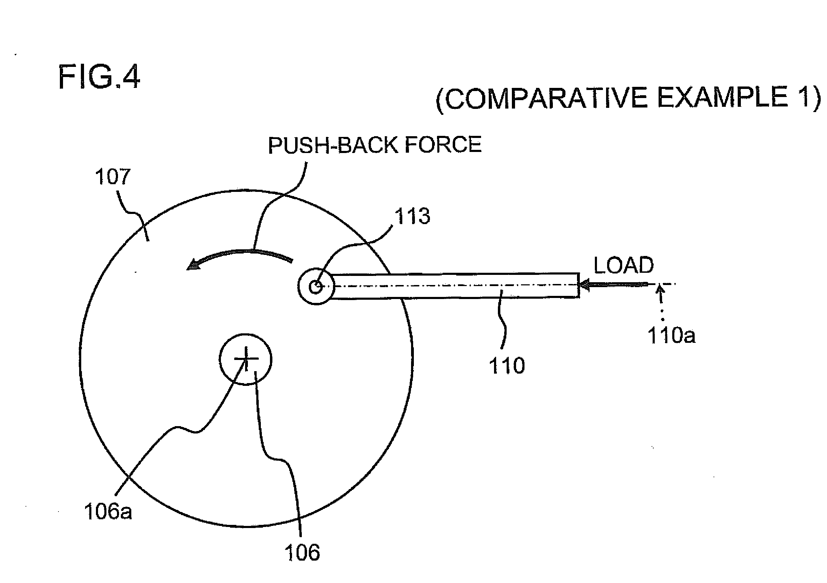

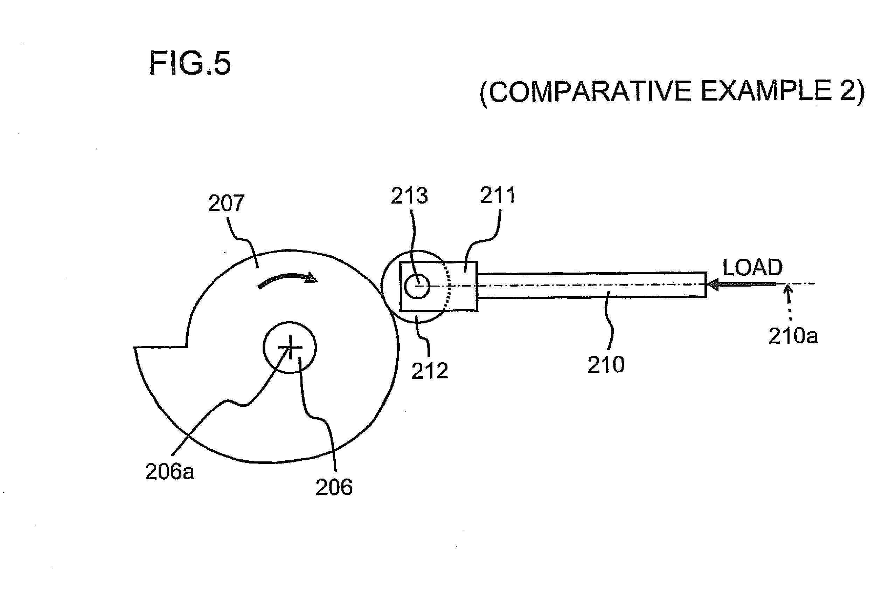

Referring to the drawings, the operation of the clutch actuator according to Example 1 of the present invention will now be explained in comparison with a Comparative Example. Fig.3 schematically shows the stroke movement of the output rod of the clutch actuator according to Example 1 of the present invention. Fig.4 schematically shows the stroke movement of an output rod of a clutch actuator according to Comparative Example 1 and Fig.5 schematically shows the stroke movement of an output rod of a clutch actuator according to Comparative Example 2.

It should be noted that Comparative Example 1 (see Fig.4) corresponds to the stroke movement unit in the clutch actuator disclosed in Patent Literature PL 1, while Comparative Example 2 (see Fig.5) corresponds to the stroke movement unit in the clutch actuator disclosed in Patent Literature PL 2.

Referring to Figs.1 and 2, upon pushing the output rod 5 outwards, the output shaft 3a of the electric motor 3 is initially driven in rotation in a forward direction of rotation. The power of rotation of the output shaft 3a is reduced in speed (gear-reduced) by the worm 4 and the worm wheel 5 and transmitted to the shaft 6. By the rotational motive power of the output shaft 3a, the cam 7 is driven in rotation in a direction in which distance of the site of abutment of the cam surface against the bearing 12 from the center axis 6a is progressively increased. Since the cam 7 thrusts the bearing 12 towards the output rod 10, that is, towards right in the figure, the output rod 10 is pushed outwards, via bearing 12, shaft (pin) 13 and holding member 1, along the center axis 10a of the output rod 10, to thrust the object under actuation. If the clutch is of the mechanical type, the object under actuation is a release fork, whereas, if the clutch is of the hydraulic type, the object under actuation is a hydraulic piston, for example. If a load (push-back load) is applied at this time from the object under actuation to the output rod 10, the push-back load is sustained, via the output rod 10, holding member 11, shaft (pin) 13, bearing 12 and the cam 7 by the shaft 6 lying on the extended line of the center axis 10a of the output rod 10 (see Fig.3). That is, the push-back load is sustained by the vehicle from the shaft 6 via the bearings 8, 9 and the housing 2 (see Figs.1 and 2). Hence, the torque produced in the direction to push back the cam by the push-back load, that is, in the direction of reverse rotation, is extremely small, so that the torque generated in the direction to push back the worm wheel 5, that is, in the direction of reverse rotation, is also extremely small. There is almost no load produced on the electric motor 3, such that power consumption may not be increased.

On the other hand in Comparative Example 1 (see Fig.4), the end part of an output rod 110 is connected for rotation to a follower rotor 107 by a rod support pin 113 at a position radially offset from a shaft 106 operating as an axis of rotation for the follower rotor 107. Hence, the center axis 106a of the shaft 106 is not situated at all times on an extended line of the center axis 110a of the output rod 110. Thus, if the center axis 106a of the shaft 106 is deviated from the extended line of the center axis of the output rod 110, there is produced a torque, by the load (push-back load) acting on the output load 110, in a direction to push back the follower rotor 107, that is, in a direction of reverse rotation. This may enhance the load exerted onto to the electric motor and hence the power consumption.

In Comparative Example 2 (see Fig.5), a center axis 206a of a shaft 206 is not on an extended line of a center axis 210a of an output rod 210. Hence, a torque is generated in a direction in which the load (push-back load) acting on the output rod 210 pushes back a cam 207 via a holding member 211, a shaft 213 and a bearing 212, that is, in a direction of reverse rotation, thus increasing the load exerted onto the electric motor and hence the power consumption.

In Example 1, since the center axis 6a of the shaft 6 is disposed on the extended line of the center axis 10a of the output rod 10, the push-back load applied to the output rod 10 may be sustained by the shaft 6 which acts as an axis of rotation of the cam 7. This reduces the torque generated in the direction of pushing back the worm wheel 5, that is, in the direction of reverse rotation, and hence reduces the load exertable on the electric motor 3, thereby providing for power saving.

### Example 2

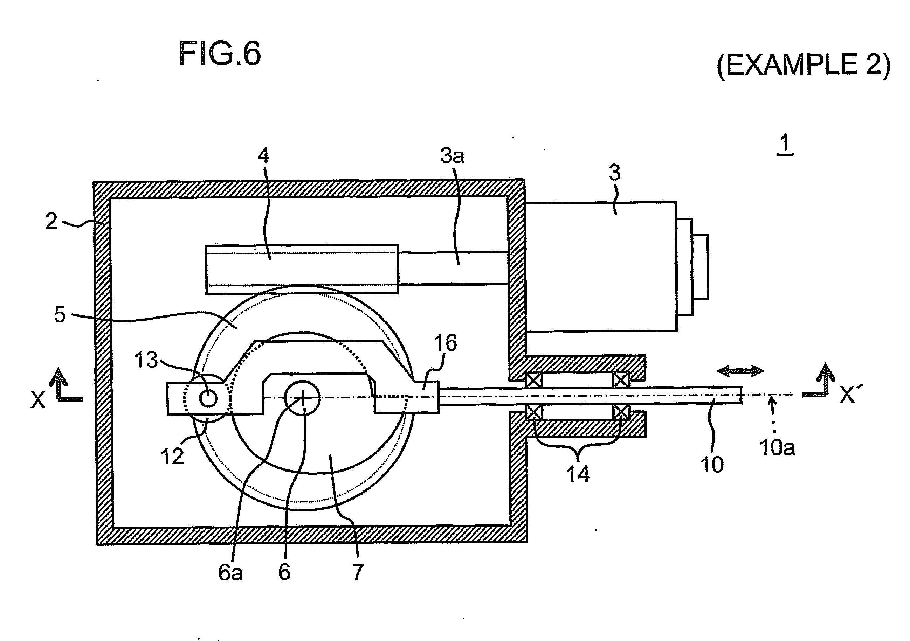

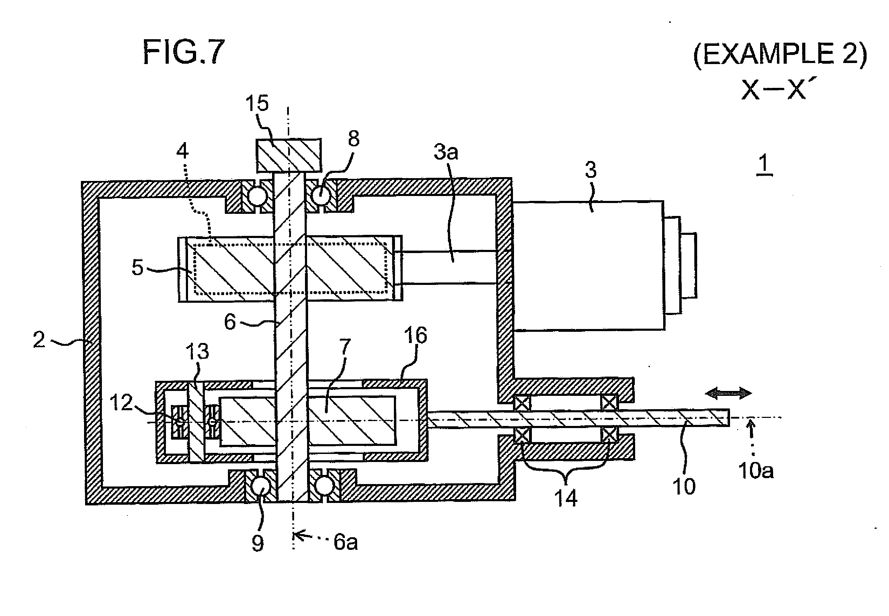

A clutch actuator according to Example 2 of the present invention will now be explained with reference to the drawings. Fig.6 is a cross-sectional view schematically showing the configuration of the clutch actuator according to Example 2 of the present invention, and Fig.7 is a cross-sectional view, taken along line X-X' of Fig.6, schematically showing the configuration of the clutch actuator according to Example 2 of the present invention.

Example 2 is a modification of Example 1, and is used for a clutch of the type in which load is applied in a direction that the output rod 10 inwardly pulls the object under actuation (in a leftward direction in Fig.6). The object under actuation is a release fork or a hydraulic piston in case the clutch is of the mechanically operated type or of the hydraulically operated type, respectively. The bearing 12 and the shaft (pin) 13 are arranged on the side of the cam 7 lying opposite to the output rod 10, that is, on the left side of the cam 7 in Fig.6, and a holding member 16 is configured to be astride (i.e., bridging over), the shaft 6 at a portion thereof secured to the output rod 10 and at another portion thereof secured to the shaft (pin) 13. The bearing 12 is abutted against the cam 7 at a location on an extended line of the center axis 10a of the output rod 10 intersecting the center axis 6a of the shaft 6. The holding member 16 is configured so as not to conflict with the cam 7, shaft 6 or the bearing 12. Otherwise, the configuration of Example 2 is similar to that of Example 1.

The operation of the clutch actuator of Example 2 will now be described with reference to Figs.6 and 7. Upon pulling back the output rod 10, the output shaft 3a of the electric motor 3 is initially driven in the forward direction of rotation. The power of rotation of the output shaft 3a is speed-reduced by the worm 4 and the worm wheel 5 and transmitted to the shaft 6. By the rotational motive power of the shaft 6, the cam 7 is driven in rotation in a direction in which the distance of the site of abutment of the cam surface against the bearing 12 from the center axis 6a is progressively increased. Since the cam 7 thrusts the bearing 12 in a direction away from the output rod 10, (that is, towards left in the figure,) the output rod 10 is pulled back along the center axis 10a of the output rod 10 to pull the object inwards. If the clutch is of the mechanical type, the object under actuation is a release fork, whereas, if the clutch is of the hydraulic type, the object under actuation is a hydraulic piston, for example. If a load (push-out load) is applied at this time from the object to the output rod 10, the push-out load is sustained, via the output rod 10, holding member 16, shaft (pin) 13, bearing 12 and the cam 7 by the shaft 6 lying on the extended line of the center axis 10a of the output rod 10. That is, the push-out load is sustained by the vehicle from the shaft 6 via the bearings 8, 9 and the housing 2. Hence, the torque produced in the direction to push back the cam 7 by the push-out load, that is, in the direction of reverse rotation, is extremely small, so that the torque generated in the direction to push-back the worm wheel 5 that is, in the direction of reverse rotation, is also extremely small. Almost no load on the electric motor 3 is produced, such that power consumption may not be increased.

In Example 2, the center axis 6a of the shaft 6 is disposed on the extended line of the center axis 10a of the output rod 10. Hence, the push-out load applied to the output load 10 may be sustained by the shaft 6 operating as an axis of rotation of the cam 7. This allows reducing the torque generated in the direction to push back the worm wheel 5, that is, in the direction of reverse rotation, thus reducing the load applied to the electric motor 3 and hence the power consumption.

### Example 3

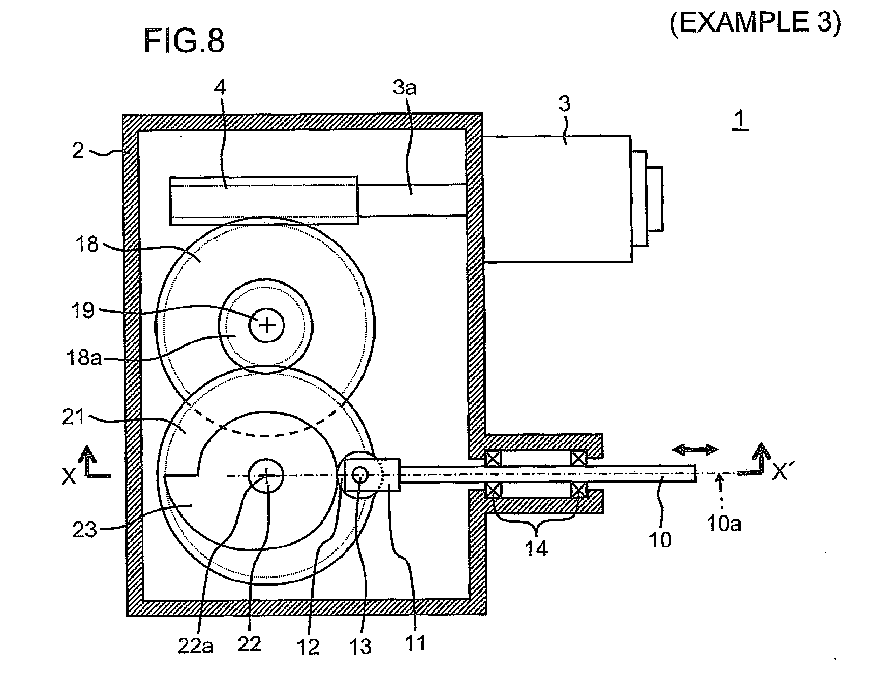

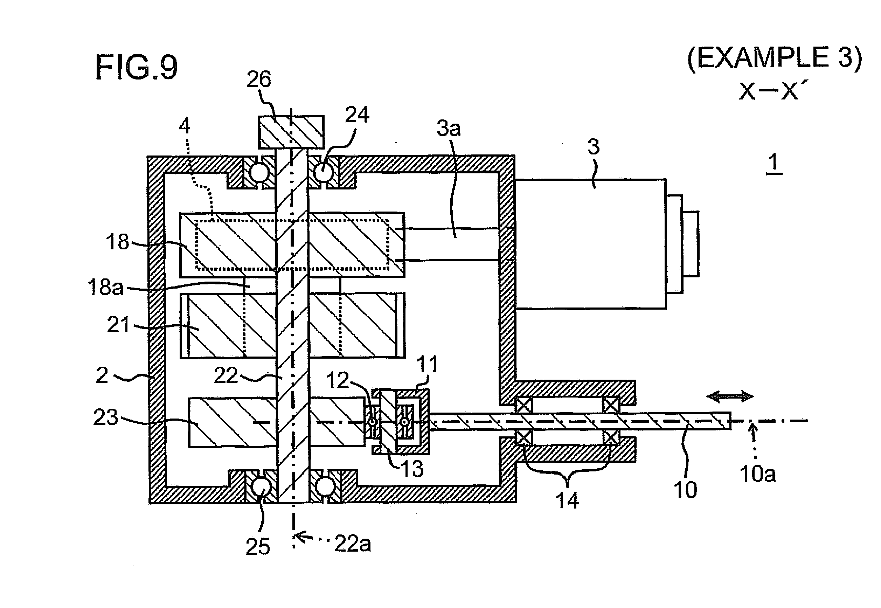

A clutch actuator according to Example 3 of the present invention will now be described with reference to the drawings. Fig.8 depicts a schematic cross-sectional view showing the configuration of a clutch actuator according to Example 3 of the present invention. Fig.9 depicts a schematic cross-sectional view along line X-X' of Fig.8, and shows the configuration of a clutch actuator according to Example 3 of the present invention.

Example 3 is a modification of Example 1, and includes, in addition to the reduction unit composed of a worm 4 and a worm wheel 18, another speed-reduction mechanism composed of a small-diameter gear 18a and a large-diameter gear 21, on a motive power transmitting path from the output shaft 3a of the electric motor 3 to a cam 23. The configuration of Example 3 other than the worm wheel 18, a shaft 19, large-diameter gear 21, shaft 22, cam 23, bearings 24, 25 and a rotation sensor 26 is the same as that in Example 1.

The worm wheel 18 is a component part of the speed-reduction mechanism having, in its main body portion, the small-diameter gear 18a meshing with the large-diameter gear 21, in addition to a helical gear meshing with the worm 4. The worm wheel 18, accommodated in the housing 2, is secured to a shaft 19 in a manner that its rotation relative to a shaft 19 is inhibited. The worm wheel is supported rotatably by the housing 2 via the shaft 19 and a bearing(s), not shown. The small-diameter gear 18a is formed as, for example, a spur gear, a helical gear or a double helical gear. The small-diameter gear 18a has a diameter smaller than the diameter of the worm wheel 18 or the large-diameter gear 21.

The shaft 19, operating as an axis of rotation for the worm wheel 18, has its one end supported rotatably by the housing 2 via a bearing, not shown, while having its other end supported for rotation by the housing 2 via another bearing, also not shown. The portion of the shaft 19 intermediate between the bearings is accommodated within the housing 2. The worm wheel 18 is secured to the portion of the shaft 19 intermediate between the bearings in a manner that its rotation relative to the shaft 19 is inhibited.

The large-diameter gear 21 is a component part of the speed-reduction mechanism meshing with the small-diameter gear 18a, and is accommodated within the housing 2. The large-diameter gear 21 is secured to a shaft 22 in a manner that its rotation relative to the shaft 22 is inhibited. The large-diameter gear 21 is carried for rotation by the housing 2 via the shaft 22 and bearings 24, 25, and is rotated in unison with the cam 23 via shaft 22. The large-diameter gear 21 is formed as, for example, a spur gear, a helical gear or a double helical gear. The large-diameter gear 21 has a diameter larger than the diameter of the small-diameter gear 18a.

The shaft 22, operating as an axis of rotation for the large diameter gear 21 and the cam 23, has its one end supported rotatably by the housing 2 via bearing 24, while having its other end supported rotatably by the housing 2 via another bearing 25. The portion of the shaft 22 intermediate between the bearings 24, 25 is accommodated within the housing 2. On one end of the shaft 22 towards the bearing 24, exposed to outside the housing 2, there is mounted a rotation sensor 26. The large-diameter gear 21 and the cam 23 are secured to the portion of the shaft 22 intermediate between the bearings 24, 25 in a manner that rotation thereof relative to the shaft 22 is inhibited. A center axis 22a of the shaft 22 is disposed on an extended line of a center axis 10a of the output rod 10.

The cam 23 is a member that varies the stroke position of the output rod 10, and is a component part of the stroke movement mechanism. The cam 23 is arranged within the housing 2. The cam 23 is arranged at a position axially offset from the large-diameter gear 21, and is secured to the shaft 22, as the axis of rotation, in such a manner that its rotation relative to the shaft 22 is not possible. The cam 23 may be rotated in synchronism and in unison with the large-diameter gear 21 via shaft 22. An outer peripheral surface of the cam 23 is formed as a curved cam surface the profile of which is changed so that the distance of the cam surface from the center axis 22a of the shaft 22 becomes progressively smaller (or larger). An outer race of the bearing 12 is abutted against the cam surface. The portion of abutment of the cam 23 against the bearing 12 is disposed on the extended line of the center axis 10a of the output rod 10. When the cam 23 is driven in rotation, the output rod 10 performs a stroke movement, along its center axis 10a, via bearing 12, shaft (pin) 13 and holding member 11. It should be noted that, in case the load applied from outside to the output rod 10 (push-back load) acts on the outer peripheral surface of the cam 23 via the holding member 11, shaft (pin) 13 and the bearing 12, only a small torque is generated in a direction to push back the cam 23, that is, in a direction of reverse direction. It is because the center axis 22a of the shaft 22 is disposed on the extended line of the center axis 10a of the output rod 10.

The bearing 24 rotatably supports one end of the shaft 22 and is mounted to the housing 2. The bearing 25 rotatably supports the other end of the shaft 22 and is similarly mounted to the housing. Slide bearings may also be used instead of the bearings 24, 25.

The rotation sensor 26 detects the angle of rotation of the shaft 22, and outputs a signal corresponding to the angle of rotation detected to an electronic controller, not shown. It should be noted that the electronic controller is responsive to the control signal corresponding to the angle of rotation from the rotation sensor 26 to control the electric motor 3, based on a map or a program, so that the output rod 10 will get to a preset stroke position.

The operation of the clutch actuator of Example 3 will now be described with reference to Figs.8 and 9. Upon pushing the output rod 5 outwards, the output shaft 3a of the electric motor 3 is initially driven in rotation in the forward direction. The power of rotation of the output shaft 3a is speed-reduced by the worm 4 and the worm wheel 18, and further speed-reduced by the small-sized gear 18a, rotated in unison with the worm wheel 18, and by the large-diameter gear 21, so as to be transmitted to the shaft 22. Due to the rotational motive power of the output shaft 22, the cam 23 is driven in rotation in a direction in which the distance of the site of abutment of the cam surface against the bearing 12 from the center axis 22a is progressively increased. Since the cam 23 thrusts the bearing 12 in a direction towards the output rod 10, that is, towards right in the figure, the output rod 10 is pushed outwards along the center axis 10a of the output rod 10 via bearing 12, shaft (pin) 13 and holding member 11 to thrust the object under actuation. If the clutch is of the mechanical type, the object being actuated is a release fork, whereas, if the clutch is of the hydraulic type, the object being actuated is a hydraulic piston, for example. If a load (push-back load) is applied at this time from the object to the output rod 10, the push-back load is sustained, via the output rod 10, holding member 11, shaft (pin) 13, bearing 12 and the cam 23 by the shaft 22 lying on the extended line of the center axis 10a of the output rod 10. That is, the push-back load is sustained by the vehicle from the shaft 22 via the bearings 24, 25 and the housing 2. Hence, the torque produced in the direction to push back the cam by the push-back load, that is, in the direction of reverse rotation, is extremely small, so that the torque generated in the direction to push back the worm wheel 18 that is, in the direction of reverse rotation, is also extremely small. Almost no load is exerted on the electric motor 3, such that power consumption may not be increased.

In the Example 3, the center axis 22a of the shaft 22 is disposed on the extended line of the center axis 10a of the output rod 10. Hence, it becomes possible for the shaft 22, operating as the axis for rotation for the cam 23, to sustain the push-back load acting on the output rod 10. Since the torque generated in the direction of pushing back the worm wheel 18, that is, in the direction of reverse rotation, may be reduced, the load on the electric motor 3 may be reduced to save the power. It is also possible to reduce the size of the clutch actuator and yet to obtain a high speed-reduction ratio (or gear-change ratio). A clutch cover with a larger actuating power for high engine torque may be coped with. Since high-speed reduction by a slide gear reduction mechanism, composed of the worm 4 and the worm wheel 18, is performed initially, the rpm of the gear reduction mechanism of the second stage, composed of the small-diameter gear 18a and the large-diameter gear 21, may be reduced to allow decreasing the frequency such as to suppress the gear noise.

### Example 4

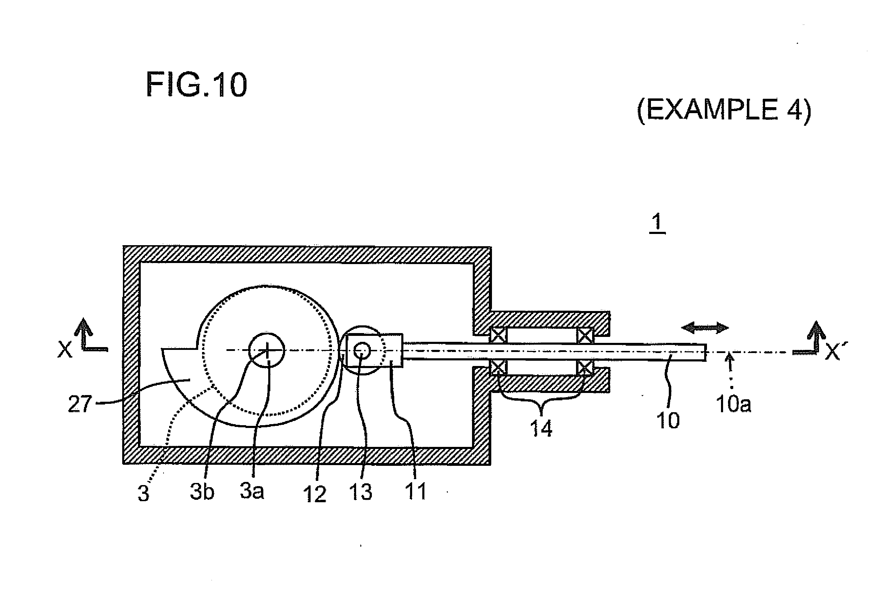

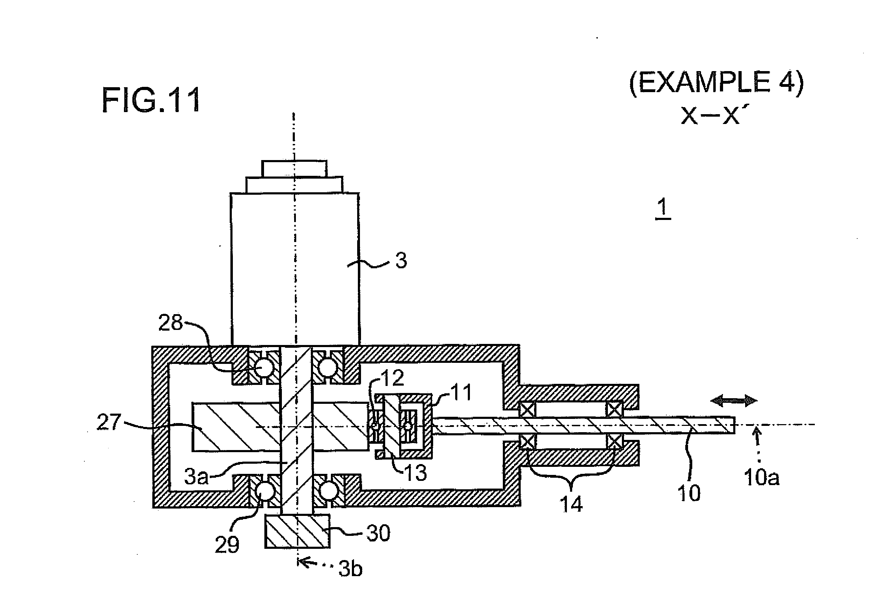

A clutch actuator according to Example 4 of the present invention will now be described with reference to the drawings. Fig.10 depicts a schematic cross-sectional view showing the configuration of a clutch actuator according to Example 4 of the present invention. Fig.11 is a schematic cross-sectional view along line X-X' of Fig.10, and shows the configuration of a clutch actuator according to Example 4 of the present invention.

The present Example 4 is a modification of Example 1. In the present Example 4, a cam 27 is secured to the output shaft 3a of the electric motor 3. The output shaft 3a is supported by the housing 2 via bearings 28, 29, and is arranged on an extended line of the center axis 10a of the output rod 10. The configuration of the Example 4 is similar to that of Example 1 except the cam 27, bearings 28, 29 and the rotation sensor 30.

The cam 27 is a member that varies the stroke position of the output rod 10, and is a component part of the stroke movement mechanism. The cam 27 is arranged within the housing 2. The cam 27 is secured to the portion of the output shaft 3a of the electric motor 3 intermediate between the bearings 28, 29 in such a manner that its rotation relative to the output shaft 3a is not possible. An outer peripheral surface of the cam 27 is formed as a curved cam surface the profile of which is changed so that the distance of the cam surface from a center axis 3b of the output shaft 3 becomes progressively smaller (or larger). An outer race of the bearing 12 is abutted against the cam surface. The portion of abutment of the cam 27 against the bearing 12 is disposed on the extended line of the center axis 10a of the output rod 10. When the cam 27 is driven in rotation, the output rod 10 performs a stroke movement, along its center axis 10a, via bearing 12, shaft (pin) 13 and holding member 11. It should be noted that, in case the load applied from outside to the output rod 10 (push-back load) acts on the outer peripheral surface of the cam 27 via the holding member 11, shaft (pin) 13 and the bearing 12, only a small torque is generated in a direction to push back the cam 7, that is, in a direction of reverse rotation. It is because the center axis 3b of the output shaft 3a is disposed on the extended line of the center axis 10a of the output rod 10.

The bearing 28 rotatably supports a terminal end of the output shaft 3a of the electric motor 3 and is mounted to the housing 2. The bearing 29 rotatably supports the foremost part of the output shaft 3a of the electric motor 3 and is similarly mounted to the housing. Slide bearings may also be used instead of the bearings 24, 25.

The rotation sensor 30 detects the angle of rotation of the output shaft 3a of the electric motor 3, and is mounted to the foremost part of the output shaft 3a exposed to outside the housing 2. The rotation sensor 30 outputs a signal corresponding to the angle of rotation detected to an electronic controller, not shown. It should be noted that the electronic controller is responsive to the control signal corresponding to the angle of rotation from the rotation sensor 30 to control the electric motor 3, based on a map or a program, so that the output rod 10 will get to a preset stroke position.

The operation of the clutch actuator of Example 4 will now be described with reference to Figs.10 and 11. Upon pushing the output rod 10 outwards, the output shaft 3a of the electric motor 3 is initially driven in rotation in the forward direction. The cam 27 is driven in rotation in a direction in which the distance of the site of abutment of the cam surface abutted against the bearing 12 from the center axis 3b is progressively increased. Since the cam 27 thrusts the bearing 12 in a direction towards the output rod 10, that is, towards right in the figure, the output rod 10 is pushed outwards via the bearing 12, shaft (pin) 13 and the holding member 11 along the center axis 10a of the output rod 10 to thrust the object. If the clutch is of the mechanical type, the object is a release fork, whereas, if the clutch is of the hydraulic type, the object is a hydraulic piston, for example. If a load (push-back load) is applied at this time from the object to the output rod 10, the push-back load is sustained, via the output rod 10, holding member 11, shaft (pin) 13, bearing 12 and the cam 27 by the output shaft 3a of the electric motor 3 lying on the extended line 10a of the center axis 10a of the output rod 10. That is, the push-back load is sustained by the vehicle from the output shaft 3a via the bearings 28, 29 and the housing 2. Hence, the torque produced in the direction to push back the cam 27 by the push-back load, that is, in the direction of reverse rotation, is extremely small. There is scarcely any load produced on the electric motor 3, such that power consumption may not be increased.

In Example 4, the center axis 3b of the output shaft 3a of the electric motor 3 is disposed on the extended line of the center axis 10a of the output rod 10. Hence, it becomes possible for the output shaft 3a of the electric motor 3, operating as the axle for rotation for the cam 27, to sustain the push-back load acting on the output rod 10. Since the torque generated in the direction of pushing back the cam 27, that is, in the direction of reverse rotation, may be reduced, the onus on the electric motor 3 may be reduced to save the electric power.

The particular exemplary embodiments or examples may be modified or adjusted within the scope of the entire disclosure of the present invention, inclusive of claims, based on the fundamental technical concept of the invention. In addition, a variety of combinations or selection of elements disclosed herein may be made within the context of the claims. That is, the present invention may cover a wide variety of modifications or corrections that may occur to those skilled in the art in accordance with the entire disclosure of the present invention, inclusive of claims, and the technical concept of the present invention.

### Explanation of reference numerals

- 1: clutch actuator
- 2: housing
- 3: electric motor (power source)
- 3a: output shaft (rotational shaft)
- 3b: center axis (of rotation)
- 4: worm
- 5: worm wheel
- 6: shaft (rotation of shaft)
- 6a: center axis
- 7: cam
- 8, 9: bearings
- 10: output rod
- 10a: center axis (of output rod)
- 11: holding member
- 12: bearing (rotor)
- 13: shaft (pin)
- 14: bushes
- 15: rotation sensor
- 16: holding member
- 18: worm wheel
- 18a: small-diameter gear portion (drive gear)
- 19: shaft
- 21: large-diameter gear (drive gear)
- 22: shaft (rotational shaft)
- 22a: center axis (of rotation)
- 23: cam
- 24, 25: bearings
- 26: rotation sensor
- 27: cam
- 28, 29: bearings
- 30: rotation sensor
- 106: shaft
- 106a: center axis (of rotation)
- 107: follower rotor
- 110: output rod
- 110a: center axis
- 113: rod support pin
- 206: shaft
- 206a: center axis (of rotation)
- 207: cam
- 210: output rod
- 210a: center axis (of output rod)
- 211: holding member
- 212: bearing
- 213: shaft (pin)

## Claims

1. A clutch actuator, comprising
a power source;
a cam rotated by rotational power transmitted from the power source; the cam having on an outer peripheral surface thereof a cam surface whose distance from an axis of rotation thereof varies; and
an output rod slidably carried by a predetermined member; the output rod performing a stroke movement along with rotation of the cam and engaging/disengaging of a clutch by the stroke movement;
the axis of rotation of the cam being arranged on an extended line of a center axis of the output rod.

2. The clutch actuator according to claim 1, further comprising:
a rotor carried rotatably by the output rod; the rotor being capable of rolling on the cam surface;
an abutting part of the cam surface and the rotor being disposed on the extended line of the center axis of the output rod on a side closer to the output rod than the axis of rotation of the cam.

3. The clutch actuator according to claim 1, further comprising
a rotor carried rotatably by the output rod; the rotor being capable of rolling on the cam surface;
an abutting part of the cam surface and the rotor being disposed on the extended line of the center axis of the output rod on a side opposite to the side of the output rod with respect to the axis of rotation of the cam.

4. The clutch actuator according to any one of claims 1 to 3, further comprising
one or a plurality of speed-reduction mechanisms that reduce speed of the rotational power output from the power source to transmit the rotational power reduced in speed to the cam.

5. The clutch actuator according to claim 4, wherein
the speed-reduction mechanism includes a worm rotationally driven by the power source; and
a worm wheel meshing with the worm and rotated in unison with the cam.

6. The clutch actuator according to claim 4, wherein
the speed-reduction mechanism includes:
a worm rotationally driven by the power source;
a worm wheel meshing with the worm;
a drive gear rotated in unison with the worm wheel and smaller in diameter than the worm wheel; and
a driven gear meshing with the drive gear and larger in diameter than the drive gear; the driven gear being rotated in unison with the cam.

7. The clutch actuator according to any one of claims 1 to 7, wherein
the axis of rotation of the cam is an output shaft of the power source.

8. The clutch actuator according to any one of claims 1 to 7, further comprising:
a housing that rotatably supports the axis of rotation of the cam.

9. The clutch actuator according to claim 1, further comprising:
a rotor carried rotatavely by the output rod; the rotor being capable of rolling on the cam surface;
an abutting part of the cam surface and the rotor being disposed on the extended line of the center axis of the output rod at a position intermediate between the axis of rotation of the cam and an end face of the output rod.

10. The clutch actuator according to claim 1, further comprising:
a rotor carried rotatably by the output rod; the rotor being capable of rolling on the cam surface;
an abutting part of the cam surface and the rotor being disposed on the extended line of the center axis of the output rod at a portion other than a position intermediate between the axis of rotation of the cam and an end face of the output rod.
